# FASCICULE DE BREVET EUROPEEN

(11) **EP 1 012 485 B1**
(45) Date de publication et mention de la délivrance du brevet: **27.10.2004**
(21) Numéro de dépôt: 98943942.7
(22) Date de dépôt: 08.09.1998
(51) Int. Cl.: F16B 21/20

(54) **Organe cylindrique muni d'un dispositif de retenue axiale dudit organe dans un alésage cylindrique d'un support**
Zylindrisches Bauteil mit einem Element zum axialen Festhalten desselben in einer zylindrischen Bohrung eines Trägers
Cylindrical element with a device for axially maintaining it within a cylindrical bore of a support

(30) Priorité: 12.09.1997 FR 9711382
(43) Date de publication de la demande: 28.06.2000
(60) Demande divisionnaire: 02010783.5
(73) Titulaire: MAGNETI MARELLI FRANCE, 92000 Nanterre (FR)
(72) Inventeur: JOIGNEAU, Jean-Pierre, F-78580 Maule (FR)
(74) Mandataire: Bérogin, Francis
(86) Numéro de dépôt international: PCT/FR1998/001916
(87) Numéro de publication internationale: WO 1999/014508

(56) Documents cités:
- EP-A- 0 664 405
- EP-A- 0 702 184
- DE-A- 2 105 990
- FR-A- 2 102 518
- FR-A- 2 664 337
- US-A- 3 779 659
- US-A- 5 014 037

## Description

La présente invention est relative à un organe cylindrique muni d'un dispositif de retenue axiale dudit organe dans un alésage cylindrique d'un support.

On connaît, notamment d'après FR-A-2 102 518, un organe de ce type, destiné à être engagé dans un alésage cylindrique d'un support, l'organe comprenant au moins une portée de guidage destinée à coopérer avec au moins un étage de l'alésage du support pour immobiliser transversalement l'organe dans le support, ledit dispositif de retenue axiale comportant une bague de retenue axiale qui comprend une âme, et des dents de retenue, l'âme étant ouverte à ses deux extrémités axiales et montée solidaire de l'organe de sorte que son axe est commun avec un axe longitudinal dudit organe, et les dents, venues de matière avec l'âme, étant espacées les unes des autres circonférentiellement et inscrites dans un cône convergent dans le sens d'engagement dudit organe dans ledit support, lesdites dents étant destinées à venir en appui élastique dans un étage dudit alésage afin d'immobiliser axialement ledit organe dans ledit support et inhiber tout mouvement dudit organe dans un sens contraire au sens d'engagement.

L'invention trouve, notamment, mais non exclusivement, son application dans la fixation d'un moteur électrique pas-à-pas ou d'un potentiomètre dans un alésage d'un corps papillon de moteur de véhicule automobile. Il est en particulier nécessaire qu'un arbre du moteur pas-à-pas ou du potentiomètre soit immobilisé transversalement et axialement par rapport au support.

On a déjà proposé de nombreux dispositifs de fixation d'un arbre dans un alésage d'un support associé. Toutefois, les dispositions connues exigent toutes une structure assez complexe disposée soit sur le support, soit sur le boîtier du moteur pas-à-pas ou du potentiomètre.

La présente invention a pour but de proposer de nouveaux moyens d'immobilisation axiale dudit arbre tout en simplifiant les structures connues et ce, par des moyens simples, efficaces et peu coûteux.

A cet effet, selon l'invention, l'organe du type précité est caractérisé en ce que l'âme est de forme tronconique, dont le sens de convergence est opposé à celui du cône dans lequel sont inscrites les dents.

L'organe suivant l'invention peut éventuellement comporter en outre une ou plusieurs des caractéristiques suivantes :
- lesdites dents sont venues de matière avec l'extrémité proximale de l'âme qui est du côté du sommet du cône dans lequel sont inscrites les dents, lesquelles dents sont par conséquent recourbées en direction de l'extrémité distale de l'âme,
- la bague de retenue axiale est une bague fendue en un matériau élastique,
- l'organe comprend une gorge ménagée circonférentiellement sur ledit organe et dans laquelle est logée la bague, dont les dents font saillie à l'extérieur de ladite gorge,
- ladite gorge est intercalée entre une première et une deuxième portées de guidage de l'organe, et la première portée de guidage est elle-même intercalée entre ladite gorge et une troisième portée de guidage dudit organe, et un joint d'étanchéité est engagé sur la troisième portée de guidage et vient en butée contre la première portée de guidage,
- lesdites troisième, première et deuxième portées de guidage de l'organe sont destinées à venir en appui chacune contre l'une respectivement de portées dudit alésage, qui est un alésage étagé comprenant quatre étages de diamètres successivement décroissants depuis une partie d'entrée dans ledit support et une partie d'extrémité opposée dudit support, de sorte qu'au montage lesdites troisième, première et deuxième portées de guidage de l'organe viennent en appui contre respectivement les quatrième, deuxième et premier étages dudit alésage, le joint d'étanchéité dudit organe coopérant alors avec le deuxième étage dudit alésage et les dents dudit organe coopérant avec le premier étage dudit alésage,
- l'organe est un boîtier d'un moteur électrique pas-à-pas,
- l'organe est un potentiomètre destiné à être retenu axialement sur ledit support, qui est un corps papillon de moteur pour véhicule automobile.

Un exemple de réalisation de l'invention va maintenant être décrit en regard des dessins annexés sur lesquels :
- la figure 1 est une vue de face d'un mode de réalisation du dispositif de retenue axiale suivant la présente invention,
- la figure 2 est une vue de côté d'un organe portant un dispositif de retenue axiale suivant la figure 1, et
- la figure 3 est une vue en coupe longitudinale de l'organe de la figure 2 immobilisé dans son support grâce au dispositif de retenue axiale de la figure 1.

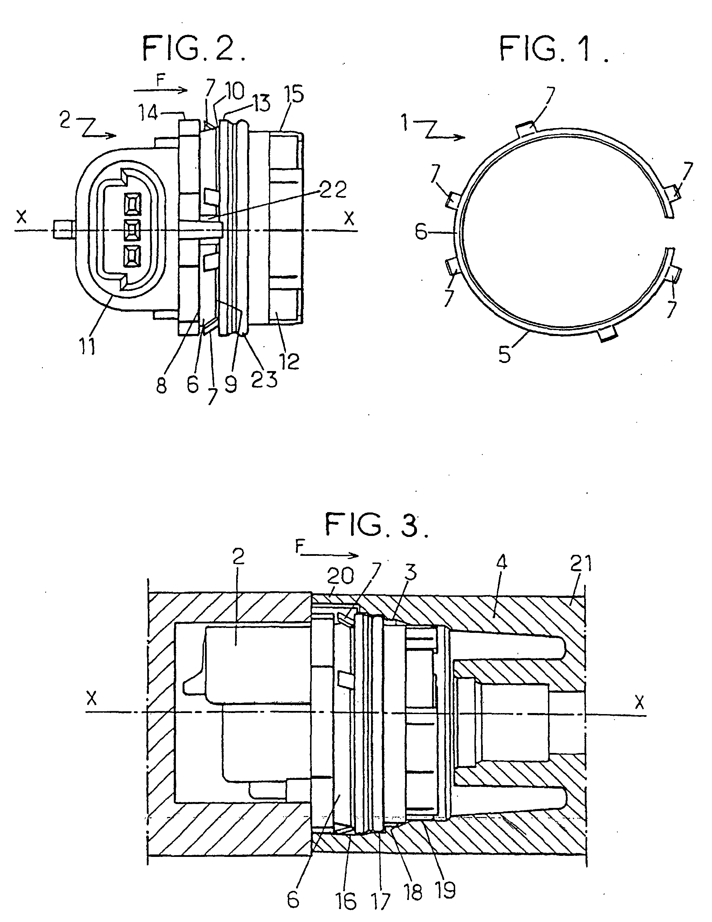

La figure 1 représente le dispositif 1 de retenue axiale d'un organe 2 suivant la présente invention, représenté à la figure 2 et destiné à être engagé dans un alésage 3 d'un support 4 représenté à la figure 3.

Le dispositif de retenue axiale 1 suivant le mode de réalisation de la présente invention est constitué d'une bague de retenue axiale 5 qui comprend une âme 6 et des dents de retenue 7 venues de matière avec cette âme.

Comme le montre plus particulièrement la figure 2, l'âme est ouverte au niveau de son extrémité distale 8 et de son extrémité proximale 9 et est d'axe X-X.

Les dents 7 sont venues de matière, espacées circonférentiellement les unes des autres, avec l'extrémité proximale 9 et sont recourbées en direction de l'extrémité distale 8.

En particulier, l'âme 6 est un corps de forme tronconique dont le sommet du cône est situé du côté de l'extrémité distale 8, c'est-à-dire à l'opposé de l'extrémité proximale 9. Les dents 7 sont recourbées en direction de l'extrémité distale 8 en étant inscrites dans un cône dont la convergence est opposée au cône mentionné précédemment. Par ailleurs, chacune des dents 7 est de forme sensiblement carrée.

Ainsi, le dispositif 1 de retenue axiale pour un organe suivant la présente invention forme une bague tronconique fendue possédant une fente 22 et qui est réalisée en un matériau métallique élastique.

L'épaisseur de cette bague est très faible par rapport à la longueur de sa circonférence et les dimensions des dents 7 sont légèrement inférieures à la largeur de la bague.

Cette bague est destinée à être mise en place dans une gorge 10 ménagée circonférentiellement sur l'organe 2 qui prend ici la forme d'un potentiomètre destiné à être immobilisé dans l'alésage 3 du support 4 prenant la forme d'un corps papillon pour moteur de véhicule automobile.

Le potentiomètre 2 est de forme cylindrique de révolution d'axe coaxial avec l'axe X-X de la bague. Il comprend une tête 11 et un fond 12, la tête 11 comportant des moyens de liaison électrique à un dispositif extérieur (non représenté) et le fond 12 enveloppant un arbre (non représenté).

La gorge 10 est intercalée entre une première 13 et une deuxième 14 portées de guidage et le fond 12 délimite une troisième portée de guidage cylindrique 15. Les dents 7 font légèrement saillie à l'extérieur de la gorge 10, c'est-à-dire font saillie à l'extérieur du cylindre défini par les portées de guidage 13 et 14.

Un joint d'étanchéité 23, par exemple torique, est engagé sur le fond 12 pour venir en butée contre la portée de guidage 13.

L'alésage 3 du corps de papillon 4 est un alésage étagé qui comprend quatre étages 16 à 19 de diamètres successivement décroissants depuis la partie supérieure 20 vers la partie inférieure 21 du corps papillon 4.

Le potentiomètre 2 est emboîté dans l'alésage 3 selon le sens de la flèche F, c'est-à-dire en pénétrant par la partie supérieure 20 dans le corps 4.

La portée de guidage 15 vient en appui tangentiellement contre le quatrième étage 19 tandis que les portées de guidage 13 et 14 du potentiomètre 2 viennent en appui tangentiel contre les deuxième et premier étages 17 et 16 du corps 4, le joint torique coopérant avec l'étage 17.

La coopération des portées de guidage avec les étages successifs permet d'immobiliser transversalement le potentiomètre 2 dans le corps 4.

Lors de la mise en place du potentiomètre 2 dans le corps 4, les dents 7 de la bague de retenue 1 sont rabattues élastiquement en direction de l'axe de révolution X-X par coopération avec le premier étage 16. Après mise en place définitive, le potentiomètre 2 ne peut pas être retiré du corps 4, dans un sens opposé au sens de pénétration défini par la flèche F, grâce aux dents 7 qui auraient alors tendance à s'écarter et à s'arc-bouter contre l'étage de l'alésage avec lequel elles coopèrent.

Ainsi, le potentiomètre est immobilisé axialement par l'intermédiaire de la bague 1.

En variante, l'organe peut être un boîtier d'un moteur électrique pas-à-pas destiné à être retenu axialement dans l'alésage du support.

## Revendications

1. Organe cylindrique (2) muni d'un dispositif de retenue axiale (1) dudit organe dans un alésage cylindrique (3) d'un support (4), dans lequel ledit organe (2) est destiné à être engagé, l'organe (2) comprenant au moins une portée (13, 14, 15) de guidage destinée à coopérer avec au moins un étage (17, 16, 19) de l'alésage (3) du support (4) pour immobiliser transversalement l'organe (2) dans le support (4), ledit dispositif de retenue axiale (1) comportant une bague de retenue axiale (5) qui comprend une âme (6), et des dents de retenue (7), l'âme (6) étant ouverte à ses deux extrémités axiales (8, 9) et montée solidaire de l'organe (2) de sorte que son axe (X-X) est commun avec un axe longitudinal dudit organe (2), et les dents (7), venues de matière avec l'âme (6), étant espacées les unes des autres circonférentiellement et inscrites dans un cône convergent dans le sens d'engagement dudit organe (2) dans ledit support (4), lesdites dents (7) étant destinées à venir en appui élastique dans un étage (16) dudit alésage (3) afin d'immobiliser axialement ledit organe (2) dans ledit support (4) et inhiber tout mouvement dudit organe (2) dans un sens contraire au sens d'engagement,
**caractérisé en ce que** l'âme (6) est de forme tronconique, dont le sens de convergence est opposé à celui du cône dans lequel sont inscrites les dents (7).

2. Organe selon la revendication 1, **caractérisé en ce que** lesdites dents (7) sont venues de matière avec l'extrémité proximale (9) de l'âme (6) qui est du côté du sommet du cône dans lequel sont inscrites les dents (7), lesquelles dents (7) sont par conséquent recourbées en direction de l'extrémité distale (8) de l'âme (6).

3. Organe selon l'une quelconque des revendications 1 et 2, **caractérisé en ce que** la bague de retenue axiale (5) est une bague fendue (22) en un matériau élastique.

4. Organe selon l'une quelconque des revendications 1 à 3, **caractérisé en ce que** l'organe (2) comprend une gorge (10) ménagée circonférentiellement sur ledit organe (2) et dans laquelle est logée la bague (5), dont les dents (7) font saillie à l'extérieur de ladite gorge (10).

5. Organe selon la revendication 4, **caractérisé en ce que** ladite gorge (10) est intercalée entre une première (13) et une deuxième (14) portées de guidage de l'organe (2), et la première portée de guidage (13) est elle-même intercalée entre ladite gorge (10) et une troisième portée de guidage (15) dudit organe (2), et un joint d'étanchéité (23) est engagé sur la troisième portée de guidage (15) et vient en butée contre la première portée de guidage (13).

6. Organe selon la revendication 5, **caractérisé en ce que** lesdites troisième (15), première (13) et deuxième (14) portées de guidage de l'organe (2) sont destinées à venir en appui chacune contre l'une respectivement de portées dudit alésage (3), qui est un alésage étagé comprenant quatre étages (16, 17, 18, 19) de diamètres successivement décroissants depuis une partie d'entrée (20) dans ledit support (4) et une partie d'extrémité opposée (21) dudit support (4), de sorte qu'au montage lesdites troisième (15), première (13) et deuxième (14) portées de guidage de l'organe (2) viennent en appui contre respectivement les quatrième (19), deuxième (17) et premier (16) étages dudit alésage (3), le joint d'étanchéité (23) dudit organe (2) coopérant alors avec le deuxième étage (17) dudit alésage (3) et les dents (7) dudit organe (2) coopérant avec le premier étage (16) dudit alésage (3).

7. Organe selon l'une quelconque des revendications 1 à 6, **caractérisé en ce que** ledit organe (2) est un potentiomètre destiné à être retenu axialement sur ledit support (4), qui est un corps papillon de moteur pour véhicule automobile.

8. Organe selon l'une quelconque des revendications 1 à 6, **caractérisé en ce que** ledit organe est un bottier d'un moteur électrique pas-à-pas.

## Patentansprüche

1. Zylindrisches Element (2), das mit einer Vorrichtung (1) zum axialen Halten des Elements in einer zylindrischen Bohrung (3) eines Trägers (4) versehen ist, in der das Element (2) in Eingriff gebracht werden soll, wobei das Element (2) mindestens eine Führungsauflagefläche (13, 14, 15) aufweist, die mit mindestens einer Stufe (17, 16, 19) der Bohrung (3) des Trägers (4) dahingehend zusammenwirken soll, das Element (2) im Träger (4) in Querrichtung festzulegen, wobei die Vorrichtung (1) zum axialen Halten einen Ring (5) zum axialen Halten aufweist, der einen Mittelteil (6) und Haltezähne (7) aufweist, wobei der Mittelteil (6) an seinen beiden axialen Enden (8, 9) offen und fest mit dem Element (2) verbunden ist, so dass seine Achse (X-X) mit einer Längsachse des Elements (2) gemein ist, und die einstückig mit dem Mittelteil (6) ausgebildeten Zähne (7) um den Umfang voneinander beabstandet sind und sich in einem Kegel befinden, der in Eingriffsrichtung des Elements (2) in den Träger (4) konvergiert, wobei die Zähne (7) in einer Stufe (16) der Bohrung (3) elastisch in Anlage kommen sollen, um das Element (2) axial im Träger (4) festzulegen und jegliche Bewegung des Elements (2) in einer der Eingriffsrichtung entgegengesetzten Richtung zu verhindern, **dadurch gekennzeichnet, dass** der Mittelteil (6) eine Kegelstumpfform aufweist, dessen Konvergenzrichtung der des Kegels, in dem sich die Zähne (7) befinden, entgegensetzt ist.

2. Element nach Anspruch 1, **dadurch gekennzeichnet, dass** die Zähne (7) einstückig mit dem proximalen Ende (9) des Mittelteils (6), das sich auf der Seite des Scheitels des Kegels befindet, in dem sich die Zähne (7) befinden, ausgebildet sind, wobei die Zähne (7) folglich in Richtung des distalen Endes (8) des Mittelteils (6) gekrümmt sind.

3. Element nach Anspruch 1 oder 2, **dadurch gekennzeichnet, dass** der Ring (5) zum axialen Halten ein gespaltener Ring (22) aus einem elastischen Material ist.

4. Element nach einem der Ansprüche 1 bis 3, **dadurch gekennzeichnet, dass** es eine um seinen Umfang ausgebildete Kehle (10) aufweist, in der der Ring (5) aufgenommen ist, dessen Zähne (7) außerhalb der Kehle (10) vorragen.

5. Element nach Anspruch 4, **dadurch gekennzeichnet, dass** die Kehle (10) zwischen einer ersten (13) und einer zweiten (14) Führungsauflagefläche des Elements (2) angeordnet ist und die erste Führungsauflagefläche (13) wiederum zwischen der Kehle (10) und einer dritten Führungsauflagefläche (15) des Elements (2) angeordnet ist und eine Dichtung (23) an der dritten Führungsauflagefläche (15) angreift und an die erste Führungsauflagefläche (13) anstößt.

6. Element nach Anspruch 5, **dadurch gekennzeichnet, dass** die dritte (15), erste (13) und zweite (14) Führungsauflagefläche des Elements (2) jeweils an einer jeweiligen der Auflageflächen der Bohrung (3) zur Anlage kommen sollen, wobei es sich bei der Bohrung um eine abgestufte Bohrung mit vier Stufen (16, 17, 18, 19) handelt, deren Durchmesser von einem Eingangsteil (20) im Träger (4) und einem gegenüberliegenden Endteil (21) des Trägers (4) nacheinander abnehmen, so dass bei der Montage die dritte (15), erste (13) und zweite (14) Führungsauflagefläche des Elements (2) jeweils an der vierten (19), zweiten (17) und ersten (16) Stufe der Bohrung (3) in Anlage kommen, wobei die Dichtung (23) des Elements (2) dann mit der zweiten Stufe (17) der Bohrung (3) zusammenwirkt und die Zähne (7) des Elements (2) mit der ersten Stufe (16) der Bohrung (3) zusammenwirken.

7. Glied nach einem der Ansprüche 1 bis 6, **dadurch gekennzeichnet, dass** das Element (2) ein Potentiometer ist, das axial am Träger (4) gehalten werden soll, bei dem es sich um einen Motordrosselklappenstutzen für ein Kraftfahrzeug handelt.

8. Element nach einem der Ansprüche 1 bis 6, **dadurch gekennzeichnet, dass** das Element ein Gehäuse eines elektrischen Schrittmotors ist.

## Claims

1. Cylindrical element (2) with a device (1) for axially maintaining it within a cylindrical bore (3) of a support (4), in which the said element (2) is intended to be engaged, wherein the element (2) has at least one guiding surface (13, 14, 15) intended to co-operate with at least one stage (17, 16, 19) of the bore (3) of the support (4) in order to transversally immobilise the element (2) in the support (4) wherein the said device (1) for axially maintaining the element has an axial maintaining ring (5) which has a core (6) and maintaining teeth (7) wherein the core (6) is open at its two axial ends (8, 9) and mounted as part of the element (2) in such a way that its axis (X-X) is common with a longitudinal axis of the said element (2) and the teeth (7) which are made of the substance of the core (6) are spaced apart from one another circumferentially and inserted in a cone converging in the direction of engagement of the said element (2) in the said support (4) wherein the said teeth (7) are intended to provide elastic support in a stage (16) of the said bore (3) in order to axially immobilise the said element (2) in the said support (4) and to inhibit any movement of the said element (2) in a contrary direction to the direction of engagement,
**characterised in that** the core (6) is in the form of a flattened cone whose direction of convergence is opposite to that of the cone in which the teeth are inserted.

2. Element according to claim 1, **characterised in that** the said teeth (7) are made of the substance of the proximal end (9) of the core (6) which is on the side of the peak of the cone in which the teeth (7) are inserted wherein the said teeth (7) are consequently curved in the direction of the distal end (8) of the core (6).

3. Element according to one of the claims 1 and 2, **characterised in that** the axial maintaining ring (5) is a split ring (22) made from an elastic material.

4. Element according to one of the claims 1 to 3, **characterised in that** the element (2) has a groove (10) arranged circumferentially on the said element (2) and in which the ring (5) is arranged, from which the teeth (7) project to the outside of the said groove (10).

5. Element according to claim 4, **characterised in that** the said groove (10) is inserted between a first (13) and a second (14) guiding surface of the element (2) and the first guiding surface (13) is itself inserted between the said groove (10) and a third guiding surface (15) of the said element (2) and a seal (23) is engaged on the third guiding surface (15) and stops against the first guiding surface (13).

6. Element according to claim 5, **characterised in that** the said third (15), first (13) and second (14) guiding surfaces of the element (2) are each intended to be supported respectively against one of the surfaces of the said bore (3) which is a staged bore with four stages (16, 17, 18, 19) with successively decreasing diameters from an entry section (20) in the said support (4) and an opposite end section (21) of the said support (4) in such a way that during assembly the said third (15), first (13) and second (14) guiding surfaces of the element (2) are supported respectively against the fourth (19), second (17) and first (16) stages of the said bore (3) wherein the seal (23) of the said element (2) thus co-operates with the second stage (17) of the said bore (3) and the teeth (7) of the said element (2) co-operate with the first stage (16) of the said bore (3).

7. Element according to one of the claims 1 to 6, **characterised in that** the said element (2) is a potentiometer intended to be axially maintained on the said support (4) which is a motor butterfly element for a motor car.

8. Element according to one of the claims 1 to 6, **characterised in that** the said element is the housing of an electric stepper motor.
